Europäisches Patentamt

European Patent Office

Office européen des brevets

(11) Numéro de publication: **0 021 960**
A2

## DEMANDE DE BREVET EUROPEEN

(21) Numéro de dépôt: **80400857.1**

(22) Date de dépôt: **13.06.80**

(51) Int. Cl.³: **A 01 G 17/14**
**E 04 G 7/18, F 16 B 7/04**

(30) Priorité: **15.06.79 FR 7915344**

(43) Date de publication de la demande:
**07.01.81 Bulletin 81/1**

(84) Etats Contractants Désignés:
**AT BE CH DE GB IT LI LU NL SE**

(71) Demandeur: **TECHNIFLORE**
**5bis rue d'Ablon**
**F-91200 Athis-Mons, Essonne(FR)**

(72) Inventeur: **Charrier, Philippe Marie**
**13 rue Marie Stuart**
**F-75002 Paris(FR)**

(74) Mandataire: **Lepeudry-Gautherat, Thérèse et al,**
**Cabinet Armengaud Jeune Casanova, Akerman,**
**Lepeudry**
**23 boulevard de Strasbourg F-75010 Paris(FR)**

(54) **Dispositif pour solidariser au moins deux éléments linéaires.**

(57) Solidarisation de deux éléments linéaires devant former un angle entre eux.

Le dispositif comprend deux embases 1 et 2 réunies par une charnière 11 et munies d'un canal transversal respectivement 3 et 4.

Après avoir plié la charnière 11, les embases sont l'une contre l'autre et les éléments à solidariser A et B sont pressés directement l'un contre l'autre, le tout est maintenu "fermé" par des boutons 12 engagés à force dans des trous 13.

Réunion de tiges et tuteurs pour plantes ainsi que d'armatures pour le béton.

Fig. 2

Dispositif pour solidariser au moins
deux éléments linéaires

Il est très fréquent que l'on doive solidariser au moins deux éléments linéaires tels que des tiges, des tubes et analogues selon des angles variables mais, généralement orthogonaux.

C'est le cas, par exemple, des tubes d'échafaudages, des tiges appelées généralement tuteur, pour guider des végétaux ou des armatures pour le béton.

Ces trois types d'éléments linéaires qui ont été cités ont été choisis pour illustrer comment le problème peut être résolu, dans la pratique, de trois manières différentes et cela avec beaucoup d'inconvénient.

Dans le premier cas, c'est-à-dire du type échafaudage, on fait appel à des colliers complexes, très élaborés et donc très coûteux composés chacun de plusieurs coquilles reliées par des charnières et devant envelopper deux à deux un tube pour être, finalement solidarisées avec des boulons et des écrous. Cette solution, indiscutablement robuste et sûre, a l'inconvénient d'être longue à mettre en place et très chère.

Dans le deuxième cas, c'est-à-dire celui des tuteurs pour les végétaux, on se trouve en présence de tiges légères et même fragiles telles que des roseaux de sorte que l'on ne cherche pas avant tout, la rigidité et la solidité de la liaison entre deux tiges. On fait alors appel à des ligatures, par exemple, en raphia ou en matière synthétique. Chaque ligature considérée en elle-même est simple mais on s'aperçoit rapidement, dans la pratique, que les manipulations sont très compliquées car il faut simultanément tenir les deux tiges dans une position relative correcte et placer la ligature, que l'on a préalablement coupée à une longueur arbitraire et rarement exacte.

Dans le troisième cas, c'est-à-dire celui des armatures en béton, on recherche non pas tellement la solidité comme dans le cas des échafaudages mais la rigidité au moins provisoire pour être assuré que les tiges d'armatures ne bougeront pas avant que le béton soit coulé. Pour cela, on fait appel à la soudure lorsque les armatures sont conformées et mises en place en atelier ou à la ligature par des fils métalliques lorsque les armatures sont mises en place sur le chantier.

Dans les deux cas, l'inconvénient majeur est le prix de revient de cette solidarisation qui exige du temps et de l'énergie.

On remarque que les explications données ci-dessus, s'appliquent à la solidarisation de deux tiges qui doivent faire entre elles un certain angle, généralement droit. Or, dans la réalité, le problème se trouve encore aggravé lorsqu'il s'agit non plus de solidariser deux tiges orthogonales mais trois selon les trois perpendiculaires d'un même point.

Les opérations nécessaires pour solidariser deux éléments sont souvent encore compliquées par la présence d'un mur à proximité des éléments linéaires lorsqu'il s'agit de tuteurs ou le peu d'accessibilité de certains éléments lorsqu'il s'agit d'armatures en béton, par exemple.

La présente invention remédie à l'ensemble des inconvénients ci-dessus en permettant de solidariser d'une manière simple et efficace au moins deux éléments linéaires formant un angle entre eux et cela, en outre, grâce à un dispositif bon marché.

A cet effet, le dispositif selon l'invention se caractérise en ce que chaque embase comprend une partie plane et un canal transversal, deux embases étant destinées à être réunies l'une à l'autre en se faisant face par leurs côtés où se trouvent les canaux, ceux-ci étant alors croisés selon un angle correspondant à celui qui est désiré pour la solidarisation des éléments et ayant une section telle que ces éléments soient appuyés directement l'un contre l'autre par pression des embases l'une vers l'autre au moyen d'organes de réunion.

L'invention sera bien comprise par la description détaillée ci-après et faite en référence au dessin annexé. Bien entendu, la description et le dessin ne sont donnés qu'à titre d'exemple indicatif et non limitatif.

La figure 1 est une vue schématique, sensiblement en plan, d'un dispositif complet, conforme à l'invention.

La figure 2 est une vue schématique du même dispositif que celui de la figure 1 mais en position de "fermeture" c'est-à-dire en position de solidarisation de deux éléments linéaires perpendiculaires.

La figure 3 est une vue schématique avec coupes partielles montrant le montage de la figure 2.

La figure 4 est une vue schématique en coupe d'une partie d'un dispositif conforme à l'invention selon une variante de réalisation.

La figure 5 est une vue schématique en perspective montrant la solidarisation de trois éléments linéaires orthogonaux selon l'invention.

En se reportant au dessin, on voit qu'un dispositif conforme à l'invention comprend deux embases 1 et 2 qui comprennent, chacune, une partie plane en forme de disque et un canal respectivement 3 et 4.

L'embase 1 est percée d'un orifice excentré 5 et l'embase 2 est percée d'un orifice également excentré 6, ces deux orifices 5 et 6 étant bordés, ici, d'une couronne en relief respectivement 7 et 8 qui leur donnent de la solidité.

Les orifices 5 et 6 sont munis d'une membrane transversale fendue en croix pour laisser subsister, en réalité, quatre languettes respectivement 9 (pour l'orifice 5) et 10 (pour l'orifice 6).

4

Les deux embases 1 et 2 sont réunies par une charnière 11 qui, dans le mode de réalisation représenté, est constituée par une bande de la même matière que celle qui constitue les embases 1 et 2 et qui est déformable. Ceci est obtenu en réalisant le tout en matière synthétique.

Enfin l'embase 1 est munie de trois boutons en relief 12 tandis que l'embase 2 est percée de trois petits trous 13 prévus selon la même répartition que les boutons 12.

On remarque que les canaux 3 et 4 sont parallèles et que la charnière 11 est prévue de telle manière que l'axe selon lequel elle doit être pliée forme un angle de 45° avec l'axe des canaux 3 et 4.

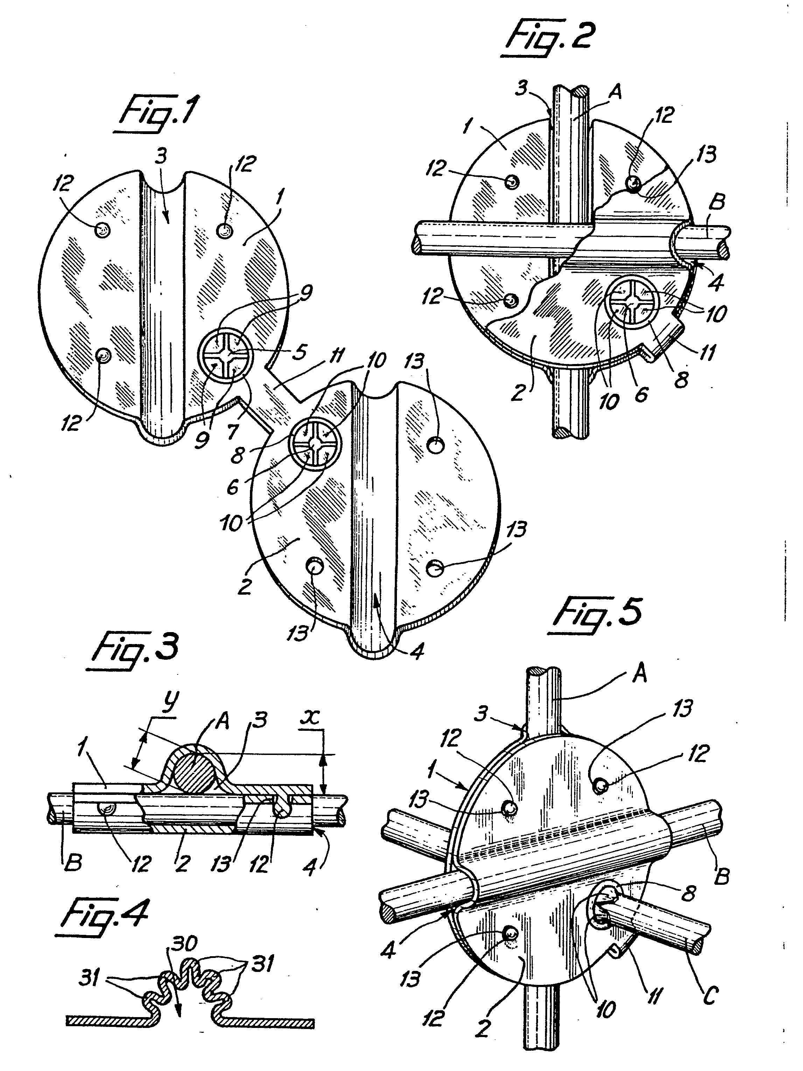

On remarque, toujours sur la figure 1, que les orifices 5 et 6 sont excentrés et sont symétriques par rapport à l'axe de la charnière 11. En outre, ils sont tous deux placés au voisinage de ladite charnière 11.

On remarque, également, que les boutons 12 et les trous 13 sont symétriques par rapport à l'axe de la charnière 11.

En d'autres termes, tous les éléments caractéristiques des deux embases 1 et 2 sont symétriques par rapport à l'axe de la charnière 11 à l'exception des canaux 3 et 4 qui sont analogues.

Avec ces dispositions, on considère que les deux embases 1 et 2 peuvent occuper, l'une par rapport à l'autre, une position "d'ouverture" comme représenté sur la figure 1 et une position de "fermeture" qui correspond à la solidarisation de deux éléments linéaires comme cela se voit sur la figure 2.

En effet, pour solidariser deux éléments linéaires A et B, on place chacun de ceux-ci dans un canal c'est-à-dire l'élément A dans le canal 3 et l'élément B dans le canal 4, puis on amène les embases 1 et 2 l'une contre l'autre par pliage de la charnière 11 de telle manière que les boutons 12 pénètrent dans les trous 13 et s'y bloquent un peu à la manière de boutons-pression.

Ce faisant, les deux éléments linéaires A et B se croisent à 90°, les canaux 3 et 4 ayant une section telle que ces éléments A et B sont appuyés directement l'un contre l'autre par pression des embases 1 et 2 l'une vers l'autre au moyen des organes de réunion qui constituent les boutons 12 et les trous 13.

On remarque ainsi que tous les éléments caractéristiques des embases 1 et 2 se correspondent parfaitement tandis que les canaux 3 et 4 se trouvent automatiquement dans une position relative différente puisque dans le cas de la figure 1 ils sont parallèles tandis que dans le cas de la figure 2 ils sont croisés à angle droit.

Sur la figure 3, on voit que la profondeur des canaux 3 et 4 est adaptée au diamètre des éléments A et B pour que ceux-ci puissent être convenablement pressés l'un contre l'autre alors que les embases 1 et 2 sont parfaitement appliquées l'une contre l'autre et maintenues ainsi par coopération des boutons 12 et des trous 13.

La profondeur $x$ du canal 3 mesurée depuis son fond jusqu'à la surface de la partie plane de l'embase 1 est sensiblement égale au diamètre $y$ de l'élément A.

Il en est de même, naturellement, pour le canal 4 et le diamètre de l'élément linéaire B.

Mais il peut se faire que le dispositif conforme à l'invention doive s'adapter à des éléments linéaires qui ont des dimensions et/ou des formes transversales différentes.

Afin d'étendre autant que faire se peut la gamme des possibilités c'est-à-dire d'adaptabilité, d'un dispositif donné à des éléments linéaires différents, on peut prévoir, comme cela est représenté sur la figure 4, que chaque canal 30 présente des ondulations longitudinales 31 aptes à lui donner une élasticité transversale pour son adaptabilité à des éléments linéaires différents.

En effet, cette structure ondulée de la paroi des canaux lui permet de s'ouvrir et/ou de se déformer par exemple pour épouser correctement la forme d'un élément linéaire non cylindrique (à section carrée) ou de diamètre relativement grand.

Avec le mode de réalisation représenté, on voit que les boutons 12 et, bien entendu les trous 13 font partie intégrante des embases 1 et 2 et sont conçus pour être complémentaires.

Tel qu'il est représenté au dessin, le dispositif conforme à l'invention peut être obtenu par moulage d'une matière synthétique et les deux embases 1 et 2, la charnière 11, les boutons 12, les trous 13 et les membranes (languettes 9 et 10) des orifices 5 et 6 sont obtenus en une seule opération de moulage et, donc, en une seule matière.

On aboutit ainsi à un dispositif très bon marché et très simple qui facilite considérablement les opérations de solidarisation d'éléments linéaires telles que celles qui ont été brièvement décrites au début de la présente description.

En se reportant maintenant à la figure 5, on voit que l'on peut obtenir, avec le même dispositif, la solidarisation d'un élément linéaire C en supplément des éléments A et B, et en l'occurrence, on obtient une liaison selon trois perpendiculaires.

L'élément C a un diamètre qui est adapté à celui des orifices 5 et 6 compte tenu de l'élasticité des languettes 9 et 10 car celles-ci se déforment vers l'extérieur lorsque l'on enfonce l'élément C perpendiculairement à leur plan et l'on voit que ces languettes étant élastiques ont tendance à se refermer sur l'élément C pour l'immobiliser et l'empêcher de glisser.

Sous cette forme de réalisation, le dispositif est très simple et très bon marché. Il résout parfaitement bien le problème de la liaison de tiges légères formant tuteurs pour des végétaux ou la liaison d'armatures à béton.

En revanche, ce mode de réalisation n'est pas celui qui doit être retenu lorsqu'on recherche une très grande solidité pour maintenir des éléments linéaires lourds tels que des tubes d'échafaudages.

Dans ce cas, au lieu de fabriquer le dispositif en matière synthétique en une seule pièce comme représenté sur la figure 1, on peut réaliser les embases 1 et 2 en métal et prévoir une charnière très solide selon n'importe quels types connus. Les organes de réunion, qui sont ici composés de boutons 12 et de trous 13, peuvent alors être constitués par des boulons et des écrous ou d'autres organes d'assemblages de tous types connus.

L'invention permet donc de choisir parmi plusieurs modes de réalisation différents selon le problème que l'on a à résoudre dans la pratique.

Il peut, bien entendu, se faire que l'on doive solidariser des éléments linéaires non plus à angle droit comme cela est représenté mais selon d'autres angles et si les deux embases 1 et 2 sont réunies par une charnière, on adapte l'angle des 3 et 4 en fonction de celui qui est désiré en position de "fermeture".

Lorsque les embases 1 et 2 sont séparées il n'existe plus de charnière 11 et l'on peut alors prévoir une série d'organes de réunion conçus de telle manière que l'on peut les faire coopérer sélectivement pour don- ner aux deux embases 1 et 2 des positions relativement différentes associées de telle manière que les canaux forment des angles adaptés à tous les cas que l'on rencontre dans la pratique.

Les dimensions relatives x et y doivent être choisies de telle manière que les éléments A et B soient appuyés l'un contre l'autre de même que les embases 1 et 2.

L'invention n'est pas limitée aux seuls modes de réalisation décrits et représentés mais en embrasse au contraire toutes les variantes.

REVENDICATIONS DE BREVET

1. Dispositif pour solidariser au moins deux éléments linéaires tels que tiges, tubes et analogues, du type comprenant deux embases munies d'organes de réunion l'une à l'autre, caractérisé en ce que chaque embase comprend une partie plane et un canal transversal, deux embases étant destinées à être réunies l'une à l'autre en se faisant face par leurs côtés où se trouvent les canaux, ceux-ci étant alors croisés selon un angle correspondant à celui qui est désiré pour la solidarisation des éléments et ayant une section telle que ces éléments soient appuyés directement l'un contre l'autre par pression des embases l'une vers l'autre au moyen d'organes de réunion.

2. Dispositif selon la revendication 1, caractérisé en ce que chaque canal présente des ondulations longitudinales aptes à lui donner une élasticité transversale pour son adaptabilité à des éléments linéaires de formes et/ou dimensions transversales différentes.

3. Dispositif selon la revendication 1, caractérisé en ce que les embases sont percées chacune d'un orifice excentré devant être placé en regard de l'orifice de l'autre embase, ces deux orifices ainsi alignés pouvant recevoir un élément linéaire traversant les deux embases.

4. Dispositif selon la revendication 1, caractérisé en ce que l'un au moins des orifices excentrés est muni d'une membrane transversale fendue et élastique.

5. Dispositif selon la revendication 1, caractérisé en ce que les organes de réunion font partie intégrante des embases et sont complémentaires pour deux embases associées.

6. Dispositif selon l'une quelconque des revendications 1 à 5 ci-dessus, caractérisé en ce que deux embases sont reliées au moyen d'une charnière par laquelle les deux embases peuvent occuper, l'une par rapport à l'autre, une position "d'ouverture" et une position de "fermeture".

7. Dispositif selon la revendication 6, caractérisé en ce que les deux embases, lorsqu'elles sont considérées en position "d'ouverture" et dans un même plan, ont leurs canaux parallèles et l'axe de leur charnière orienté à $45°$ par rapport à l'axe desdits canaux, ceux-ci devant se croiser à angle droit lorsque les embases sont en position de "fermeture".

8. Dispositif selon les revendications 3 et 6, caractérisé en ce que les orifices excentrés des deux embases sont symétriques par rapport à l'axe de la charnière et sont placés au voisinage de ladite charnière.

9. Dispositif selon l'une quelconque des revendications 6 à 8 ci-dessus, caractérisé en ce que devant être obtenu par moulage d'une matière synthétique, les deux embases, la charnière, qui les relie, les organes de réunion et, éventuellement, la membrane des orifices sont obtenus en une seule pièce.

Fig.1

Fig.2

Fig.3

Fig.4

Fig.5